# EUROPÄISCHE PATENTSCHRIFT

(11) **EP 2 998 157 B1**
(45) Veröffentlichungstag und Bekanntmachung des Hinweises auf die Patenterteilung: **03.07.2019**
(21) Anmeldenummer: 15185989.9
(22) Anmeldetag: 21.09.2015
(51) Int. Cl.: B60N 2/66, B60N 2/22

(54) **FAHRZEUGSITZ MIT WIPPENARTIGEM ELEMENT IN DER RÜCKENLEHNE**
VEHICLE SEAT WITH FLIP ELEMENT IN THE BACKREST
SIEGE DE VEHICULE DOTE D'UN ELEMENT DE TYPE BALANCIER DANS LE DOSSIER

(30) Priorität: 22.09.2014 DE 102014113651; 12.03.2015 DE 102015103644
(43) Veröffentlichungstag der Anmeldung: 23.03.2016
(73) Patentinhaber: GRAMMER AG, 92224 Amberg (DE)
(72) Erfinder: Übelacker, Roland, 92536 Pfreimd (DE); Schneider, Franz, 92318 Neumarkt (DE)
(74) Vertreter: Hannke, Christian

(56) Entgegenhaltungen:
- JP-A- 2001 095 638
- US-A- 5 735 574
- US-A1- 2006 103 211

## Beschreibung

Die Erfindung betrifft einen Fahrzeugsitz, umfassend eine Rückenlehne mit einem Rückenlehnen-Polsterteil und einem Rückenlehnen-Gestellanteil und ein Sitzteil mit einem Sitzteil-Polsterteil und einem Sitzteil-Gestellanteil, wobei das Sitzteil gegenüber der Rückenlehne in Fahrzeugsitzlängsrichtung nach vorne und/ oder nach hinten verschiebbar angeordnet ist, gemäß dem Oberbegriff des Anspruchs 1. Der Stand der Technik ist aus der Offenbarung JP2001095638 A bekannt.

Fahrzeugsitze, welche beispielsweise zur Verwendung in Zügen oder Bussen vorgesehen sind, weisen oftmals eine Möglichkeit zur Verstellung der Neigung der Rückenlehne auf, damit der Sitzinsasse zum Beispiel von einer aufrechten ersten Stellung in eine bequemere zweite Stellung wechseln kann. Diese Verstellmöglichkeit wird auch stufenlos oder in einer oder mehreren Stufen angeboten, damit der Sitzinsasse neben einer ersten aufrechten Endstellung und einer zweiten geneigten Endstellung eine oder mehrere Zwischenpositionen anwählen kann, um die für ihn komfortabelste Position zu finden. Diese Möglichkeit hat aber den entscheidenden Nachteil, dass zumeist die Rückenlehne gegenüber dem Sitzteil nur so verschwenkbar ist, dass sie in dem Raum hineinragt, in dem der Fahrgast dahinter sitzt. Dieser fühlt sich dadurch beeinträchtigt. Ferner können das Sitzteil und das Rückenlehnenteil meist nur getrennt voneinander verstellt werden, was als lästig und umständlich empfunden wird.

Daher ist es Aufgabe der vorliegenden Erfindung, einen Fahrzeugsitz zu entwickeln, der einfache Verstellmöglichkeiten von Rückenlehne und Sitzteil aufweist, die beispielsweise auch simultan stattfinden können. Ferner ist es Ziel, einen Fahrzeugsitz zu entwickeln, der eine Anpassung der Rückenlehne an die jeweiligen Bedürfnisse des Sitzinsassen ermöglicht, ohne den Fahrgast hinter diesem Fahrzeugsitz zu belästigen.

Diese Aufgabe wird gelöst von einem Fahrzeugsitz gemäß Anspruch 1.

Das wippenähnliche Element ist also derart mit dem Sitzteil verbunden, dass ein Verschieben des Sitzteils automatisch ein Verschieben des unteren Endes des wippenartigen Elements nach vorne und damit eine Verschwenkung des wippenähnlichen Elements um die horizontal verlaufende Achse bewirkt. Bei dieser Bewegung erfährt bevorzugt die Rückenlehne keine Neigung nach hinten um eine Achse, die an einem unteren Ende der Rückenlehne angebracht ist; vielmehr ist alleine durch die Verstellung des wippenähnlichen Elements eine veränderte Rückenlehnenneigung sowohl oberhalb als auch unterhalb der angeordneten Achse erreichbar. Mit anderen Worten wird bevorzugt die Umhüllende des Fahrzeugsitzes zumindest am hinteren Bereich der Rückenlehne nicht verändert. Das erste Mitnehmerelement kann auch als Verbindungselement bezeichnet werden, da es das wippenähnliche Element mit dem Sitzteil verbindet.

Im Sinne der vorliegenden Erfindung wird mittels der Ausdrücke "erste Verbindung", "zweite Verbindung" usw. nicht eine Festlegung der Anzahl der vorhandenen Verbindungen getroffen, sondern vielmehr zwischen verschiedenen Verbindungsarten unterschieden.

Um die Neigungsänderung reversibel zu gestalten, hat es sich bewährt, wenn am Sitzteil-Gestellanteil und/ oder am ersten Mitnehmerelement ein zweites Mitnehmerelement angeordnet ist, welches mit dem unteren Ende des wippenähnlichen Elements mittels einer dritten Verbindung wirkverbindbar ist, derart, dass bei einem Verschieben des Sitzteils gegenüber der Rückenlehne nach hinten zumindest das untere Ende mit nach hinten verschiebbar ist. Somit kann das wippenähnliche Element bequem wieder zurückverschwenkt werden; beispielsweise in seine Ausgangsstellung, indem das zweite Mitnehmerelement beispielsweise analog zum ersten Mitnehmerelement das wippenähnliche Element wieder nach hinten mitnimmt. Dazu kann dieses zweite Mitnehmerelement beispielsweise separat am Rahmen des Fahrzeugsitzes bzw. am Sitzteil-Gestellanteil befestigt sein und/ oder so angeordnet sein, dass in Richtung nach vorne gesehen zunächst das erste Mitnehmerelement, dann das wippenähnliche Element und dann das zweite Mitnehmerelement aufeinanderfolgen.

Die Funktionsweise des zweiten Mitnehmerelements und die Verbindung des zweiten Mitnehmerelements mit dem wippenähnlichen Element können analog zu denen bezüglich des ersten Mitnehmerelements vorliegen oder unterschiedlich dazu sein. Denkbar ist auch, dass das zweite Mitnehmerelement mit dem ersten Mitnehmerelement verbunden und/ oder an diesem angeordnet ist, so dass beide (bezogen auf eine Querschnittsansicht des Fahrzeugsitzes) wie eine Art Gabel oder Ypsilon das wippenähnliche Element umgeben.

Eine Bewegung des wippenähnlichen Elements wieder zurück in seine Ausgangsposition kann aber beispielsweise auch dadurch erreicht werden, indem das wippenähnliche Element bei einer Bewegung in die Position mittels des Verbindungselements als Federelement verspannt wird. Durch Nachhintenschieben des Verbindungselements bewirkt die Vorspannungskraft des Federelements das Wiedereinnehmen der Position. Gleichzeitig ist es denkbar, dass zusätzliche Federn mit einem ersten Ende am wippenähnlichen Element beispielsweise unterhalb der Achse und mit einem zweiten Ende am Gestell angeordnet sind, welche bei einer Bewegung des wippenähnlichen Elements in die Position gespannt werden und somit eine Rückkehr in die Ausgangsposition nach Verschieben des ersten Mitnehmerelements nach hinten ermöglichen.

Um die Platzverhältnisse im Fahrzeugsitz nicht zu sehr zu strapazieren, ist erfindungsgemäß das wippenähnliche Element mit seiner Längsausdehnung sich in Fahrzeugsitzhöhenrichtung erstreckend angeordnet, wobei ein oberer Abschnitt des wippenähnlichen Elements oberhalb der Achse und ein unterer Abschnitt des wippenähnlichen Elements unterhalb der Achse angeordnet ist. Der obere Abschnitt kann auch als erstes oder oberes Teil und der untere Abschnitt auch als zweites oder unteres Teil bezeichnet werden.

Somit kann oberhalb und unterhalb der Achse eine unterschiedliche Veränderung der Neigung bzw. der Wölbung der Rückenlehne stattfinden. Es hat sich in der Praxis bewährt, wenn ein Verhältnis der Länge des oberen Abschnitts zur Länge des unteren Abschnitts bezogen auf die Längserstreckung des wippenähnlichen Elements erfindungsgemäß einem Wert aus einem Bereich von 0,3 bis 0,7, weiter bevorzugt einem Wert von 0,5 entspricht.

Besonders einfach gelingt das Mitnehmen des wippenähnlichen Elements durch die Bewegung des ersten Mitnehmerelements nach vorne, wenn ein oberes Ende des ersten Mitnehmerelements in Fahrzeugsitzhöhenrichtung mit dem unteren Ende des zweiten Abschnitts überlappend und in Fahrzeugsitzlängsrichtung hinter dem unteren Ende angeordnet ist. Analog dazu gelingt das Mitnehmen des wippenähnlichen Elements durch die Bewegung des zweiten Mitnehmerelements nach hinten besonders einfach, wenn ein oberes Ende des zweiten Mitnehmerelements in Fahrzeugsitzhöhenrichtung mit dem unteren Ende des zweiten Abschnitts überlappend und in Fahrzeugsitzlängsrichtung vor dem unteren Ende angeordnet ist.

Auf diese Weise kommt es bei einem Verschieben des Sitzteils automatisch zu einer Kontaktierung von erstem bzw. zweitem Mitnehmerelement mit dem unteren Ende des wippenähnlichen Elements, wodurch eine Art Zwangsführung resultiert. Mitnehmerelement und wippenähnliches Element können gegeneinander lose kontaktierend anliegen bzw. lose aneinander vorbeigleiten, mithin eine lose Gleitverbindung zueinander ausbilden. Dabei kann sogar auf Befestigungsmittel zwischen Mitnehmerelementen und wippenähnlichem Element verzichtet werden, was Kosten spart.

Alternativ dazu gibt es die Möglichkeit, Langlöcher im wippenähnlichen Element und Bohrungen in dem oder den Mitnehmerelementen anzuordnen. Diese Aussparungen werden nun gegeneinander relativbeweglich beispielsweise mittels einer Kombination aus Schraube und Mutter fixiert, aber nicht gegeneinander verspannt, so dass die Bohrungen entlang der Längsausdehnung des Langlochs und damit das oder die Mitnehmerelemente relativ zum wippenähnlichen Element verschiebbar sind. Diese Variante hat den Vorteil, dass eine bessere Führung der beiden Komponenten gegeneinander möglich ist, ohne die Bewegung der beiden Komponenten zu sehr einzuschränken. Berücksichtigt werden muss ja, dass das wippenähnliche Element eine Rotationsbewegung und das oder die Mitnehmerelement(e) bevorzugt eine Translationsbewegung durchführen, wodurch sich das untere Ende des wippenähnlichen Elements beispielsweise vom oberen Ende des ersten Mitnehmerelements in einem gewissen Maße wegbewegen können muss.

Es ist also gemäß einer weiteren bevorzugten Ausführungsform vorteilhaft, wenn die erste Verbindung und/ oder die dritte Verbindung eine lose Gleitverbindung oder eine relativbewegliche Verbindung ist.

Weiterhin ist die zweite Verbindung bevorzugt eine starre oder eine flexible Verbindung. In erstem Fall wird das Mitnehmerelement mit möglichst wenigen Toleranzen durch das Sitzteil-Gestellanteil geführt. In letzterem Fall erlaubt die zweite Verbindung eine Verschwenkung des ersten Mitnehmerelements gegenüber dem Sitzteil-Gestellanteil zumindest in einem geringen Maße. Dies dient zur Vermeidung mechanischer Spannungen, die sich bei einem nicht reibungsfreien Verschieben aufbauen könnten.

Weiter bewährt hat sich in der Praxis, wenn gemäß einer weiteren bevorzugten Ausführungsform das wippenartige Element bezogen auf die Querrichtung des Fahrzeugsitzes mittig angeordnet ist und/ oder mindestens zwei Kanten aufweist, welche im Wesentlichen in Längsausdehnung des wippenartigen Elements verlaufend angeordnet sind und mittels der eine erste rechte und eine zweite linke flügelähnliche Lasche ausgebildet sind, welche in einem Winkel zu einer in der Mitte des wippenähnlichen Elementes ausgebildeten Hauptlasche angeordnet sind.

Durch die mittige Anordnung wird der Rücken des Sitzinsassen symmetrisch abgestützt. Die Form des menschlichen Rückens wird durch die Anordnung der gekanteten Laschen nachgebildet und damit der Rücken sehr gut unterstützt.

Beispielsweise weist das wippenartige Element eine Breite auf, die der Hälfte oder 75% der Breite des gesamten Fahrzeugsitzes entspricht. Auch andere Breitenverhältnisse sind möglich. Bevorzugt ist das wippenartige Element zwischen Lendenwirbelsäulenbereich und Schulterbereich des Fahrers angeordnet, so dass die horizontale Achse, um die es schwenkbar gelagert ist, auf einer Höhe von etwa 30% bis 70%, bevorzugt 40% bis 60%, meist bevorzugt auf einer Höhe von 50% der Gesamthöhe des Fahrzeugsitzes angeordnet ist.

Die Form des wippenähnlichen Elementes ist bevorzugt plattenähnlich und bevorzugt zu einer Ebene, die in Fahrzeuglängsrichtung und Fahrzeughöhenrichtung verläuft, symmetrisch ausgebildet. Gleichzeitig ist das wippenähnliche Element vorteilhaft so im Polster integriert, dass es für den Fahrgast nicht sichtbar, mithin innerhalb des Polsterbezuges angeordnet ist. Dies sorgt einerseits für eine schönere Optik und andererseits dafür, dass sich der Fahrgast nicht an Kanten des wippenähnlichen Elementes verletzt. In seinem oberen Bereich bzw. oberen Abschnitt kann das wippenähnliche Element bzw. die Wippe beispielsweise mit einer Art Durchzugselement mit dem Polster verbunden sein. Dieses Durchzugselement kann beispielsweise aus einem oder mehreren am wippenähnlichen Element angeordneten Bügeln und einem oder mehreren am Polster angeordneten Gummibändern bestehen, wobei jeweils ein Gummiband durch jeweils einen Bügel hindurchgeführt und beispielsweise mittels eines Klettverschlusses, welcher durch verschiedene Abschnitte des Gummibandes selbst ausgebildet wird, an sich selbst befestigt wird und somit eine geschlossene Schlaufe bildet.

Die Unterstützung des Rückens des Sitzinsassens kann weiter begünstigt werden, wenn in Längserstreckung des wippenähnlichen Elements betrachtet der obere Abschnitt geradlinig verlaufend ausgebildet und/ oder der untere Abschnitt mindestens drei gekrümmt oder geradlinig verlaufende Unterabschnitte aufweist. Hierbei kann entweder nur der Verlauf des mittigen Anteils des wippenartigen Elements gemeint sein, also beispielsweise die Hauptlasche, oder aber der Verlauf des mittigen und der seitlichen Anteile, also beispielsweise der Verlauf der Hauptlasche und der Verlauf der flügelähnlichen Laschen.

Dabei ist ausgehend von dem Befestigungsbereich des wippenähnlichen Elements an der Achse der zweite Abschnitt in einem ersten Abschnitt bevorzugt zunächst nach vorne gekrümmt, in einem zweiten Abschnitt bevorzugt nach hinten gekrümmt, und in einem dritten Abschnitt bevorzugt wieder nach vorne gekrümmt. Zwischen diesen ersten bis dritten Abschnitten können geradlinig verlaufende Abschnitte liegen. Denkbar ist auch, dass das wippenähnliche Element durchgehend oder im Wesentlichen durchgehend ausgestaltet ist und/ oder die verschieden gekrümmten Abschnitte an der Rückseite des Polsterabschnitts der Rückenlehne, der benachbart zum wippenähnlichen Element angeordnet ist, vorliegen.

Um den Sitz stabiler zu gestalten und besser auf individuelle Wünsche des Sitzinsassen und vor allem auf Sitzinsassen mit unterschiedlichen Abmaßen einstellen zu können, ist es vorteilhaft, wenn die Achse mittels eines am Rückenlehnen-Gestellanteil angeordneten Querholmelements ausgebildet ist und/ oder gegenüber dem Rückenlehnen-Gestellanteil höhenverschiebbar angeordnet ist.

Durch die Höhenverstellung der Achse ändert sich auch die Höhe des Punkts, der die Trennung zwischen unterem und oberem Abschnitt darstellt, mithin als Umschaltpunkt bezeichnet werden kann. Dessen Position wiederum entscheidet über die Art der Wölbungs- bzw. Neigungsverstellung der Rückenlehne (nach vorne oder nach hinten).

Ebenfalls kann das Verbindungselement höhenverstellbar ausgerichtet werden, um das Maß der Verschwenkung des wippenähnlichen Elements beeinflussbar zu gestalten, mithin die Lendenbauschhöhe anzupassen und den Lordose-Druckpunkt zu verschieben.

Es hat sich weiterhin bewährt, wenn das wippenartige Element elastisch oder teilelastisch ist und/ oder aus Metall, bevorzugt Stahl, weiter bevorzugt Federstahl, und/ oder aus Kunststoff besteht. Dadurch wird ermöglicht, dass das wippenähnliche Element entweder in sich selbst elastisch verformt wird oder nur eine Verschwenkung um die Achse ohne Verformung stattfindet, wobei Zwischenstufen möglich sind.

Zur weiteren Optimierung des Verhaltens des wippenähnlichen Elements ist es vorteilhaft, wenn das wippenartige Element in Zonen aufgeteilt ist, wobei die Zonen sich hinsichtlich ihrer Materialzusammensetzung, ihrer Dicke und/ oder ihrer Eigenschaften unterscheiden und/ oder eine Aufteilung des wippenartigen Elements in die Zonen hinsichtlich dessen Längsausdehnung, Breitenausdehnung und/ oder Höhenausdehnung ausgebildet ist.

Somit kann diese Aufteilung - beim in einem Fahrzeugsitz eingebauten wippenähnlichen Element betrachtet - in vertikaler Richtung oder in horizontaler Richtung oder in beiden Richtungen erfolgen. Möglich ist ebenso eine Aufteilung, die sich in eine, zwei oder allen dreien Dimensionen erstreckt.

Weiterhin ist es vorteilhaft, wenn die Rückenlehne hinsichtlich eines Neigungsgrades gegenüber dem Sitzteil in mindestens zwei, bevorzugt in mehrere Positionen, oder stufenlos zwischen einer hinteren Extremposition und einer vorderen Extremposition verstellbar ist. So können die Bedürfnisse unterschiedlichster Sitzinsassen in verschiedenen Situationen erfüllt werden.

Weitere Vorteile, Ziele und Eigenschaften vorliegender Erfindung werden anhand anliegender Zeichnung und nachfolgender Beschreibung erläutert, in welchen beispielhaft ein erfindungsgemäßer Fahrzeugsitz dargestellt und beschrieben ist. In der Zeichnung zeigen:
- Figur 1a: schematisch eine perspektivische Ansicht eines erfindungsgemäßen Fahrzeugsitzes;
- Figur 1b: schematisch eine weitere perspektivische Ansicht des Fahrzeugsitzes gemäß Figur 1a;
- Figur 2: schematisch eine Querschnittansicht des Fahrzeugsitzes gemäß Figur 1a in einer Seitenansicht;
- Figur 2a: schematisch eine erste Ausschnittsansicht der Ansicht gemäß Figur 2;
- Figur 2b: schematisch eine zweite Ausschnittsansicht der Ansicht gemäß Figur 2;
- Figur 3a: schematisch eine Querschnittansicht des Fahrzeugsitzes gemäß Figur 1a in einer Draufsicht gemäß einer ersten Position;
- Figur 3b: schematisch eine Querschnittansicht des Fahrzeugsitzes gemäß Figur 1a in einer Draufsicht gemäß einer zweiten Position.

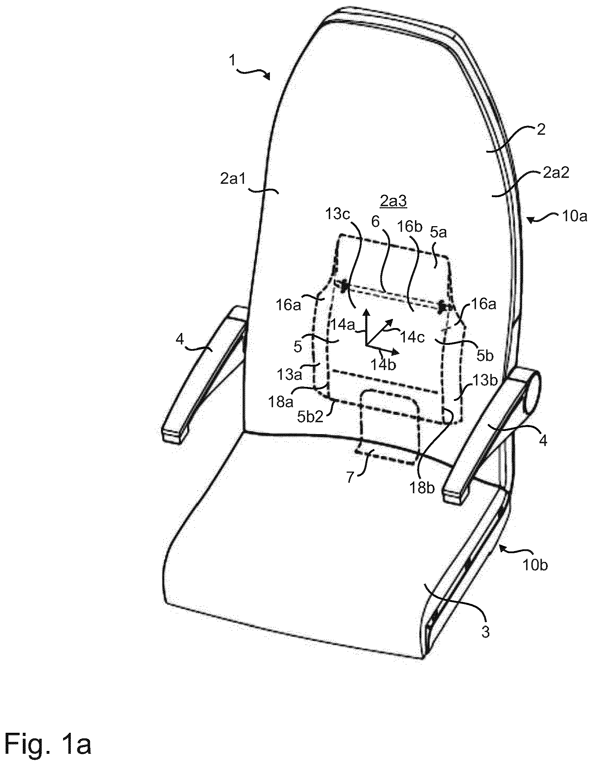

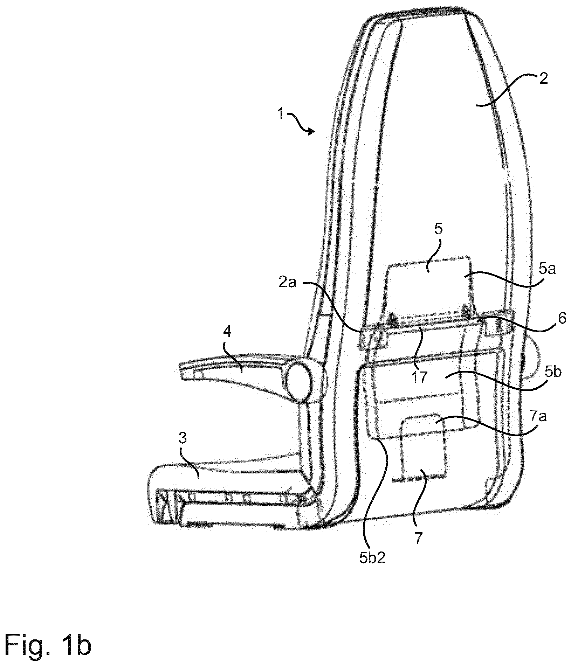

In Figur 1a und 1b sind perspektivische Ansichten des Fahrzeugsitzes 1 zu sehen. Dieser Fahrzeugsitz weist eine Rückenlehne 2, ein Sitzteil 3 und zwei Armlehnen 4 auf. Sowohl Rückenlehne 2 als auch Sitzteil 3 weisen jeweils ein Gestell in Form eines Rückenlehnen-Gestellanteils 2a und eines Sitzteil-Gestellanteils 3a auf, das ihnen Stabilität verleiht. Über dieses Gestell ist eine Polsterung angebracht, welches im vorliegenden Fall separat als Polsterteil 10a für die Rückenlehne 2 und Polsterteil 10b für das Sitzteil 3 vorliegt.

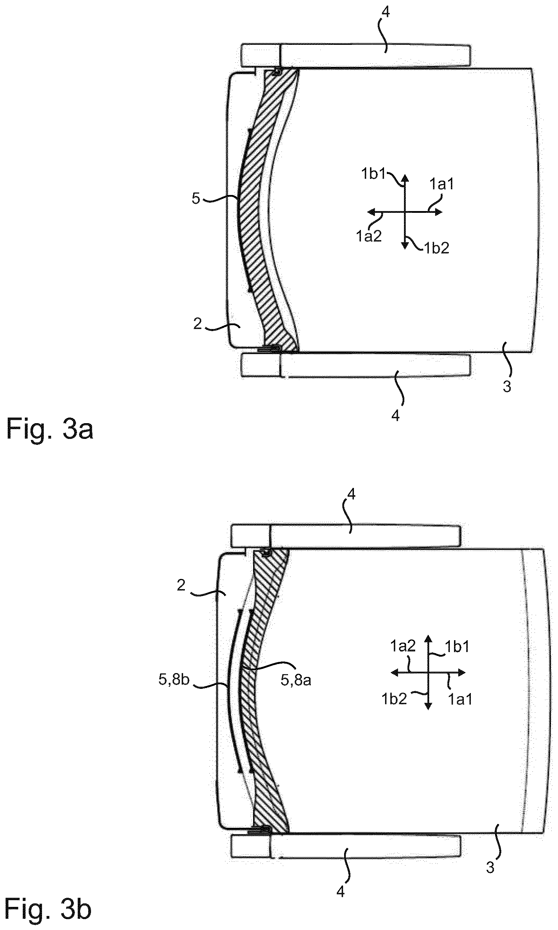

Ein wippenartiges Element 5 ist innerhalb des Fahrzeugsitzes 1 bezogen auf die Querrichtung des Fahrzeugsitzes 1b mittig angeordnet, so dass der Rücken des (nicht gezeigten) Fahrgastes links 1b1 und rechts 1b2 (bezogen auf die Querrichtung 1b, siehe auch Fig. 3a und Fig. 3b) symmetrisch abgestützt wird. Das wippenartige Element 5 ist innerhalb des Rückenlehnen-Polsteranteils 10a so angeordnet, dass es hinsichtlich seiner Längsausdehnung 14a im Wesentlichen sich in Fahrzeugsitzhöhenrichtung 1c erstreckend angeordnet ist. Die Achse 6 ist in Form eines in Fahrzeugsitzbreitenrichtung 1b verlaufenden Querholmelements 17 mit dem Rückenlehnen-Gestellanteil 2a verbunden.

Das gezeigte wippenähnliche Element 5 weist nun einen oberen Abschnitt 5a auf, der oberhalb der Achse 6 angeordnet ist, und einen unteren Abschnitt 5b, der unterhalb der Achse 6 angeordnet ist. Der untere Abschnitt 5b weist ein unteres Ende 5b2 und der obere Abschnitt 5a ein oberes Ende 5a1 auf.

Um die Steifigkeit des wippenähnlichen Elementes 5 zu erhöhen, weist es Kanten 16a, 16b bzw. Kantungen in vertikaler Richtung auf, mittels der eine erste rechte 13a und eine zweite linke flügelähnliche Lasche 13b ausgebildet sind, welche bevorzugt in einem Winkel zur Hauptlasche 13c in der Mitte des wippenähnlichen Elementes 5 angeordnet sind. Dabei sind die Laschen 13a, 13b, 13c im vorliegenden Fall aus Kunststoff und einteilig ausgebildet, wobei die Hauptlasche 13c zusätzlich mit einem Metallstreifen (nicht gezeigt) hinten und vorne verstärkt sein kann.

Dadurch bildet sich innerhalb des wippenähnlichen Elements 5 eine erste (aufgeteilte) Zone 18a mittels der Seitenlaschen 13a, 13b und eine zweite Zone 18b mittels der Hauptlasche 13c aus, wobei sich die erste Zone 18a und die zweite Zone 18b hinsichtlich ihrer Eigenschaften und ihrer Dicke unterscheiden. Vorliegend ist beispielsweise sowohl die Dicke als auch die Steifigkeit der zweiten Zone 18b höher als die der ersten Zone 18a.

Das wippenartige Element 5 besteht hier aus einem Metall wie Stahl, bevorzugt Federblech, oder aus einem Kunststoff und ist gänzlich elastisch oder teilelastisch.

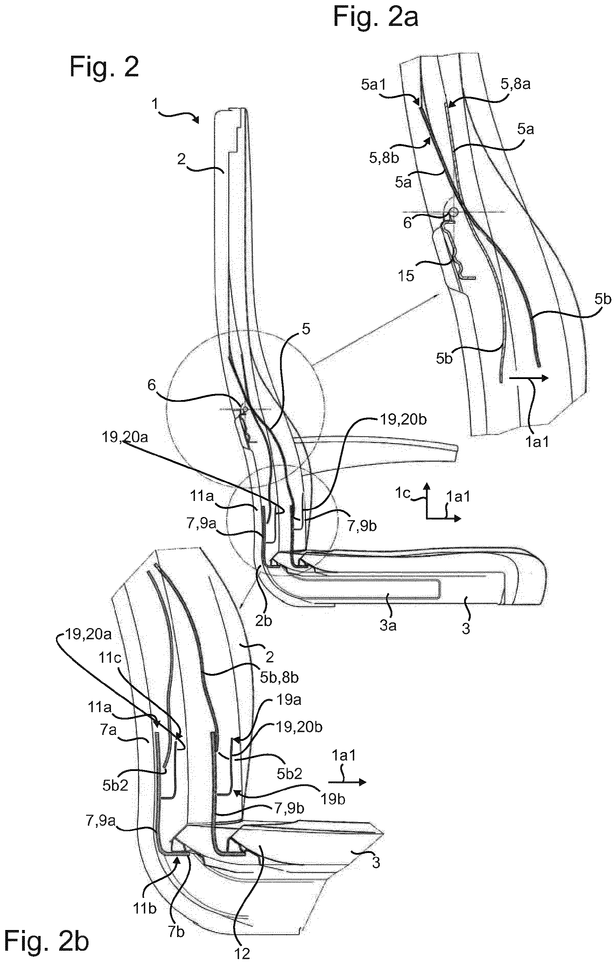

Wie in den Figuren 2, 2a und 2b gut zu sehen, ist bevorzugt an der Unterseite (in Fahrzeughöhenrichtung 1c gesehen) des wippenähnlichen Elements 5 ein Verbindungselement 7 angeordnet, welches geeignet ist, das wippenähnliche Element 5 mit dem Sitzteil 3 mechanisch wirkzuverbinden und wie nachfolgend beschrieben als erstes Mitnehmerelement 7 fungiert. Dazu weist das Verbindungselement 7 bevorzugt einen im Wesentlichen L-förmigen Querschnitt bezogen auf die Ebene, die in Fahrzeuglängsrichtung 1a und Fahrzeughöhenrichtung 1c verläuft, auf.

Ein oberes Ende 7a des im Wesentlichen vertikal verlaufenden ersten Schenkels des Verbindungselements 7 ist in Höhenrichtung 1c des Fahrzeugsitzes 1 gesehen mit dem unteren Ende 5b2 des wippenähnlichen Elements 5 überlappend angeordnet und mittels einer ersten Verbindung 11a beispielsweise nur daran mittels einer losen Gleitverbindung anliegend, aber nicht damit fest verbunden angeordnet. Dies spart Montagekosten und erleichtert die Verschwenkung des wippenähnlichen Elements 5 wie später noch beschrieben. Es ist auch möglich, dass zumindest in der Grundstellung 9a das erste Mitnehmerelement 7 und das wippenähnliche Element 5 bzw. das untere Ende 5b2 des wippenähnlichen Elements zueinander beabstandet angeordnet sind.

Weiterhin denkbar ist eine flexible Ausgestaltung der ersten Verbindung 11a, beispielsweise mittels einer Verbindung mit Gummibändern, oder eine Ausgestaltung der ersten Verbindung 11a über eine Längsführung mittels Langlöchern.

Ein vorderes Ende 7b des im Wesentlichen horizontal verlaufenden zweiten Schenkels des Verbindungselements 7 ist mit einem Abschnitt 12 eines Sitzteil-Gestellanteils 3a mechanisch verbunden mittels einer zweiten Verbindung 11b angeordnet. Dabei ist die zweite Verbindung 11b vorliegend starr ausgebildet, so dass das Verbindungselement 7 bei einer Verschiebung des Sitzteils 3 in Fahrzeugsitzlängsrichtung nach vorne 1a1 ebenfalls nach vorne 1a1 verschoben wird. Analog dazu wird das Verbindungselement 7 bei einer Verschiebung des Sitzteils 3 in Fahrzeugsitzlängsrichtung nach hinten 1a2 ebenfalls nach hinten 1a2 verschoben. Unterhalb der Achse 6 ist ein Befestigungselement 15 angeordnet.

In Fig. 2b ist nun deutlich zu sehen, dass bei einem Verschieben des Sitzteils 3 nach vorne 1a1 das Verbindungselement 7 von einer ersten hinteren Position 9a in eine zweite vordere Position 9b mitverschoben wird. Wie oben beschrieben ist die Einnahme verschiedener Positionen denkbar, auch wenn bei der Beschreibung der Figuren nur auf zwei verschiedene Positionen eingegangen wird. Denkbar ist auch, dass die erste hintere Position 9a noch nicht die hintere Extremposition und dass die zweite vordere Position 9b noch nicht die vordere Extremposition darstellt. Dabei ist unter Extremposition jeweils die Position zu verstehen, die bezogen auf den Grad der Steilheit des wippenähnlichen Elements 5 den höchsten Grad (hintere Position) oder niedrigsten Grad (vordere Position) aufweisen.

Das Verschieben des Sitzteils 3 kann beispielsweise durch den Fahrgast selbst verursacht werden, indem dieser während des Sitzens auf dem Fahrzeugsitz 1 beispielsweise den vorderen Teil des Sitzteils 3 greift und nach vorne 1a1 zieht. Analog dazu kann der Fahrgast das Sitzteil nach hinten 1a2 verschieben, indem er den vorderen Teil des Sitzteils 3 greift und nach hinten 1a2 drückt.

Wie in Fig. 2b weiterhin deutlich zu sehen ist, bewirkt das Verschieben des ersten Mitnehmerelements 7 von Position 9a in Position 9b, dass das obere Ende 7a des ersten Mitnehmerelements 7 das untere Ende 5b2 des unteren Abschnitts 5b des wippenähnlichen Elements 5 ebenfalls von einer ersten hinteren Position 8a in eine zweite vordere Position 8b mitnimmt und so mit nach vorne 1a1 verschiebt. Durch die Lagerung des wippenähnlichen Elements 5 um die Achse 6 verschwenkt bei dieser Bewegung das gesamte wippenähnliche Element 5 um die Achse 6, wodurch der obere Abschnitt 5a des wippenähnlichen Elements 5 nach hinten 1a2 und gleichzeitig das obere Ende 5a1 des oberen Abschnitts 5a nach unten verschwenkt wird. Analog wird das untere Ende 5b2 nicht nur nach vorne 1a1 verschoben, sondern auch nach oben verschwenkt.

Deutlich zu sehen ist, dass bei dieser Bewegung die Rückenlehne 2 keine Neigung nach hinten um eine Achse, die an einem unteren Ende 2b der Rückenlehne 2 angebracht ist, erfährt, sondern dass alleine durch die Verstellung des wippenähnlichen Elements 5 die Komfortstellung für den Fahrgast erreichbar ist. Mit anderen Worten wird bevorzugt die Umhüllende des Fahrzeugsitzes 1 zumindest am hinteren Bereich der Rückenlehne 2 nicht verändert.

Des Weiteren erlaubt die im Vergleich zur Breite des Fahrzeugsitzes 1 reduzierte Breite des wippenähnlichen Elements 5, dass die Seitenbereiche der Rückenlehne 2, auch Lehnenwangen 2a1, 2a2 genannt, nicht mit nach vorne bewegt werden. Es wird im Gegenteil nur die Neigung der Rückenlehne 2 von einer ersten steilen Position 8a in eine zweite, weniger steile Position 8b verstellt. Somit wird das Seitenpolster gehalten, während die Bewegung der Lehnenneigungsverstellung im Anlagebereich des Rückens 2a3 des Sitzinsassens stattfindet.

Bevorzugt werden also die Seitenbereiche des Rückenlehnen-Polsterteils 10a bzw. der Rückenlehne 2 am Rahmen gehalten und nicht mit nach vorne 1a1 bewegt, unabhängig von den Geschehnissen im mittleren Bereich der Rückenlehne 2. Dies kann beispielsweise so realisiert werden, indem das Rückenlehnen-Polsterteil 10a auf eine Art Aufsteckrahmen gespannt ist, wobei beide Teile miteinander, also Rückenlehnen-Polsterteil 10a und Aufsteckrahmen, ein Ersatzteil bilden können. Muss nun die Rückenlehne 2 ausgetauscht werden, kann das alte Ersatzteil entfernt und ein neues Ersatzteil aufgesteckt werden, wobei der Aufsteckrahmen am bleibenden restlichen Rückenlehnen-Gestellanteil 2a aufgesteckt und/ oder befestigt wird. Dieser Aufsteckrahmen wird ebenfalls über das wippenähnliche Element 5 gesteckt und verbleibt bei einer Bewegung des Sitzteils 3 an seinem Platz.

Die Querwölbung der Rückenlehne 2 unterhalb der Achse 6, mithin des Schwenkpunkts des wippenähnlichen Elements 5, wird bevorzugt erhöht, wenn das Sitzteil 2 nach vorne 1a1 verschoben wird und bevorzugt erniedrigt, wenn das Sitzteil 2 nach hinten 1a2 verschoben wird. Der obere Abschnitt 5a des wippenähnlichen Elements 5 ist vorliegend geradlinig verlaufend ausgebildet. Der untere Abschnitt 5b des wippenähnlichen Elements 5 ist vorliegend gekrümmt verlaufend ausgebildet, wobei ausgehend von dem Befestigungsbereich des wippenähnlichen Elements 5 an der Achse 6 der untere Abschnitt 5b in einem ersten Unterabschnitt oder Teilabschnitt zunächst nach vorne gekrümmt ist, in einem zweiten Teilabschnitt nach hinten gekrümmt ist, und in einem dritten Teilabschnitt wieder nach vorne gekrümmt ist. Zwischen diesen ersten bis dritten Abschnitten liegen geradlinig verlaufende Abschnitte.

Somit bildet das wippenähnliche Element 5 mittels seines oberen Abschnitts 5a eine Kyphose aus, mithin eine Form, die den Schulterbereich bzw. den oberen Rücken des Sitzinsassen stützt. Gleichermaßen bildet das wippenähnliche Element 5 bevorzugt mittels seines unteren Abschnitts 5b eine Lordose aus, mithin eine Form, die den Lendenwirbelbereich bzw. den unteren Rücken des Sitzinsassen stützt.

Ebenfalls ist in Fig. 2b schematisch ein zweites Mitnehmerelement 19 abgebildet, welches vorliegend beispielhaft in Form einer in etwa L-förmigen Platte mit seinem unteren Ende 19b starr am ersten Mitnehmerelement 7 angeordnet ist. Diese Verbindung zwischen zweitem Mitnehmerelement 19 und erstem Mitnehmerelement 7 kann beispielsweise mittels einer Schweißverbindung ausgebildet werden. Durch die Anordnung einer starren Verbindung verschiebt sich entsprechend das zweite Mitnehmerelement 19 mit dem ersten Mitnehmerelement 7, so dass sich beide Mitnehmerelemente 7, 19 gleichzeitig zum Beispiel in ihrer ersten hinteren Position 9a, 20a oder in ihrer zweiten vorderen Position 9b, 20b befinden können.

Das zweite Mitnehmerelement 19 ist hier mit dem unteren Ende 5b2 des wippenähnlichen Elements 5 mittels einer dritten Verbindung 11c, vorliegend einer analog zur ersten Verbindung 11a ausgebildeten losen Gleitverbindung, derart wirkverbindbar, dass bei einem Verschieben des Sitzteils 3 gegenüber der Rückenlehne 2 nach hinten 1a2 das untere Ende 5b2 des wippenähnlichen Elements 5 mit nach hinten 1a2 verschiebbar ist. Ein oberes Ende 19a des zweiten Mitnehmerelements 19 ist in Fahrzeugsitzhöhenrichtung 1c mit dem unteren Ende 5b2 des zweiten Abschnitts 5b überlappend und in Fahrzeugsitzlängsrichtung 1a vor dem unteren Ende 5b2 angeordnet.

So umgeben beide Mitnehmerelemente 7, 19 bezogen auf die vorliegende Querschnittsansicht des Fahrzeugsitzes 1 wie eine Art Gabel oder Ypsilon das wippenähnliche Element 5. Die Figuren 3a und 3b zeigen den erfindungsgemäßen Fahrzeugsitz 1 und dessen Komponenten noch einmal aus der Vogelperspektive, wobei in Fig. 3b die Positionen 8a, 8b des wippenähnlichen Elements 5 noch einmal verdeutlichend nebeneinander zu finden sind. Vorliegend ist die Achse 6 des wippenähnlichen Elements 5 in Höhenrichtung 1c verschiebbar gestaltet, um dem Benutzer eine individuelle Einstellung zu ermöglichen. Weiterhin ist der Einbau eines wippenähnlichen Elements 5 mit verlängerter bzw. verkürzter Längsausdehnung in Höhenrichtung 1c denkbar. So kann beispielsweise bereits im oberen Teil der Rückenlehne 2 eine Kyphosenstellung erreicht werden.

### Bezugszeichenliste

- 1: Fahrzeugsitz
- 1a: Fahrzeugsitzlängsrichtung
- 1a1: Richtung nach vorne
- 1a2: Richtung nach hinten
- 1b: Fahrzeugsitzbreitenrichtung
- 1b1: links
- 1b2: rechts
- 1c: Fahrzeugsitzhöhenrichtung
- 2: Rückenlehne
- 2a: Rückenlehnen-Gestellanteil
- 2a1, 2a2: Lehnenwangen
- 2a3: Anlagebereich des Rückens
- 3: Sitzteil
- 3a: Sitzteil-Gestellanteil
- 4: Armlehne
- 5: wippenähnliches Element
- 5a: oberer Abschnitt
- 5b: unterer Abschnitt
- 5b2: unteres Ende
- 6: Achse
- 7: erstes Mitnehmerelement
- 7a: oberes Ende
- 7b: vorderes Ende
- 8a, 8b: Positionen
- 9a, 9b: Positionen
- 10a: Rückenlehnen-Polsterteil
- 10b: Sitzteil-Polsteranteil
- 11a, 11b, 11c: Verbindung
- 12: Abschnitt des Gestells
- 13a, 13b, 13c: Laschen
- 14a: Längsausdehnung
- 14b: Breitenausdehnung
- 14c: Höhenausdehnung
- 15: Befestigungselement
- 16a, 16b: Zonen
- 17: Querholmelement
- 18a, 18b: Kanten
- 19: zweites Mitnehmerelement
- 19a: oberes Ende
- 19b: unteres Ende
- 20a, 20b: Positionen

## Patentansprüche

1. Fahrzeugsitz (1), umfassend eine Rückenlehne (2) mit einem Rückenlehnen-Polsterteil (10a) und einem Rückenlehnen-Gestellanteil (2a) und ein Sitzteil (3) mit einem Sitzteil-Polsterteil (10b) und einem Sitzteil-Gestellanteil (3a), wobei das Sitzteil (3) gegenüber der Rückenlehne (2) in Fahrzeugsitzlängsrichtung nach vorne (1a1) und/ oder nach hinten (1a2) verschiebbar angeordnet ist,
wobei ein wippenähnliches Element (5) innerhalb des Rückenlehnen-Polsterteils (10a) um eine am Rückenlehnen-Gestellanteil (2a) in Sitzbreitenrichtung (1b) angeordnete Achse (6) schwenkbar angeordnet ist, und wobei ein mittels einer zweiten Verbindung (11b) mit dem Sitzteil-Gestellanteil (3b) verbundenes erstes Mitnehmerelement (7) mit einem unteren Ende (5b2) des wippenähnlichen Elements (5) mittels einer ersten Verbindung (11a) wirkverbindbar ist, derart, dass bei einem Verschieben des Sitzteils (3) gegenüber der Rückenlehne (2) nach vorne (1a1) zumindest das untere Ende (5b2) des wippenähnlichen Elements (5) mit nach vorne (1a1) verschiebbar ist,
**dadurch gekennzeichnet, dass** das wippenähnliche Element (5) mit seiner Längsausdehnung (14a) sich in Fahrzeugsitzhöhenrichtung (1c) erstreckend angeordnet ist, wobei ein oberer Abschnitt (5a) des wippenähnlichen Elements (5) oberhalb der Achse (6) und ein unterer Abschnitt (5b) des wippenähnlichen Elements (5) unterhalb der Achse (6) angeordnet sind und ein Verhältnis einer Länge des oberen Abschnitts (5a) zu einer Länge des unteren Abschnitts (5b) bezogen auf eine Längserstreckung des wippenähnlichen Elements (5) einem Wert aus einem Bereich von 0,3 bis 0,7 entspricht.

2. Fahrzeugsitz (1) nach einem der vorhergehenden Ansprüche,
**dadurch gekennzeichnet, dass**
am Sitzteil-Gestellanteil (3b) und/ oder am ersten Mitnehmerelement (7) ein zweites Mitnehmerelement (19) angeordnet ist, welches mit dem unteren Ende (5b2) des wippenähnlichen Elements (5) mittels einer dritten Verbindung (11c) wirkverbindbar ist, derart, dass bei einem Verschieben des Sitzteils (3) gegenüber der Rückenlehne (2) nach hinten (1a2) zumindest das untere Ende (5b2) mit nach hinten (1a2) verschiebbar ist.

3. Fahrzeugsitz (1) nach einem der vorhergehenden Ansprüche, **dadurch gekennzeichnet, dass**
ein oberes Ende (7a) des ersten Mitnehmerelements (7) in Fahrzeugsitzhöhenrichtung (1c) mit dem unteren Ende (5b2) des zweiten Abschnitts (5b) überlappend und in Fahrzeugsitzlängsrichtung (1a) hinter dem unteren Ende (5b2) angeordnet ist.

4. Fahrzeugsitz (1) nach einem der Ansprüche 2 oder 3, **dadurch gekennzeichnet, dass**
ein oberes Ende (19a) des zweiten Mitnehmerelements (19) in Fahrzeugsitzhöhenrichtung (1c) mit dem unteren Ende (5b2) des zweiten Abschnitts (5b) überlappend und in Fahrzeugsitzlängsrichtung (1a) vor dem unteren Ende (5b2) angeordnet ist.

5. Fahrzeugsitz (1) nach einem der Ansprüche 2-4, **dadurch gekennzeichnet, dass** die erste Verbindung (11a) und/oder die dritte Verbindung (11c), soweit der Anspruch 5 sich auf Anspruch 2 bezieht, eine lose Gleitverbindung oder eine relativbewegliche Verbindung ist.

6. Fahrzeugsitz (1) nach einem der vorhergehenden Ansprüche, **dadurch gekennzeichnet, dass**
das wippenartige Element (5) bezogen auf die Querrichtung (1b) des Fahrzeugsitzes (1) mittig angeordnet ist und/ oder mindestens zwei Kanten (18a, 18b) aufweist, welche im Wesentlichen in Längsausdehnung (14a) des wippenartigen Elements (5) verlaufend angeordnet sind und mittels der eine erste rechte (13a) und eine zweite linke flügelähnliche Lasche (13b) ausgebildet sind, welche in einem Winkel zu einer in der Mitte des wippenähnlichen Elementes (5) ausgebildeten Hauptlasche (13c) angeordnet sind.

7. Fahrzeugsitz (1) nach einem der Ansprüche 1-6, **dadurch gekennzeichnet, dass**
in Längserstreckung (14a) des wippenähnlichen Elements (5) betrachtet der obere Abschnitt (5a) geradlinig verlaufend ausgebildet und/ oder der untere Abschnitt (5b) mindestens drei gekrümmt oder geradlinig verlaufende Unterabschnitte aufweist.

8. Fahrzeugsitz (1) nach einem der vorhergehenden Ansprüche, **dadurch gekennzeichnet, dass** die Achse (6) mittels eines am Rückenlehnen-Gestellanteil (2a) angeordneten Querholmelements (17) ausgebildet ist und/ oder gegenüber dem Rückenlehnen-Gestellanteil (2a) höhenverschiebbar angeordnet ist.

9. Fahrzeugsitz (1) nach einem der vorhergehenden Ansprüche, **dadurch gekennzeichnet, dass** das wippenartige Element (5) elastisch oder teilelastisch ist und/ oder aus Metall, bevorzugt Stahl, weiter bevorzugt Federstahl, und/ oder aus Kunststoff besteht.

10. Fahrzeugsitz (1) nach einem der vorhergehenden Ansprüche, **dadurch gekennzeichnet, dass**
das wippenartige Element (5) in Zonen (16a, 16b) aufgeteilt ist, wobei die Zonen (16a, 16b) sich hinsichtlich ihrer Materialzusammensetzung, ihrer Dicke und/ oder ihrer Eigenschaften unterscheiden und/ oder eine Aufteilung des wippenartigen Elements (5) in die Zonen (16a, 16b) hinsichtlich dessen Längsausdehnung (14a), Breitenausdehnung (14b) und/ oder Höhenausdehnung (14c) ausgebildet ist.

11. Fahrzeugsitz (1) nach einem der vorhergehenden Ansprüche, **dadurch gekennzeichnet, dass**
die Rückenlehne (2) hinsichtlich eines Neigungsgrades gegenüber dem Sitzteil (3) in mindestens zwei (8a, 8b) Positionen, bevorzugt in mehrere Positionen, oder stufenlos zwischen einer hinteren Extremposition und einer vorderen Extremposition verstellbar ist.

## Claims

1. Vehicle seat (1) comprising a backrest (2) that has a backrest cushion part (10a) and a backrest frame part (2a), and a seat part (3) that has a seat part cushion part (10b) and a seat part frame part (3a), the seat part (3) being movably arranged relative to the backrest (2) towards the front (1a1) and/or towards the rear (1a2) in the vehicle length direction,
a rocker-like element (5) being arranged within the backrest cushion part (10a) so as to be able to pivot about a pivot (6) arranged on the backrest frame part (2a) in the seat width direction (1b), and a first driver element (7), connected to the seat part frame part (3b) by means of a second connection (11b), being operatively connectable to a lower end (5b2) of the rocker-like element (5) by means of a first connection (11a) such that, when moving the seat part (3) relative to the backrest (2) towards the front (1a1), at least the lower end (5b2) of the rocker-like element (5) can be moved towards the front (1a1) therewith,
**characterised in that**
the longitudinal extension (14a) of the rocker-like element (5) extends in the vehicle seat height direction (1c),
an upper portion (5a) of the rocker-like element (5) being arranged above the pivot (6) and a lower portion (5b) of the rocker-like element (5) being arranged below the pivot (6) and a ratio of a length of the upper portion (5a) to a length of the lower portion (5b) with respect to a longitudinal extension of the rocker-like element (5) corresponding to a value in a range of from 0.3 to 0.7.

2. Vehicle seat (1) according to any of the preceding claims,
**characterised in that**
a second driver element (19) is arranged on the seat part frame part (3b) and/or on the first driver element (7), which second driver element is operatively connectable to the lower end (5b2) of the rocker-like element (5) by means of a third connection (11c) such that, when the seat part (3) is moved relative to the backrest (2) towards the rear (1a2), at least the lower end (5b2) can be moved towards the rear (1a2) therewith.

3. Vehicle seat (1) according to either of the preceding claims,
**characterised in that**
an upper end (7a) of the first driver element (7) is arranged so as to overlap the lower end (5b2) of the second portion (5b) in the vehicle seat height direction (1c) and behind the lower end (5b2) in the vehicle seat length direction (1a).

4. Vehicle seat (1) according to either claim 2 or claim 3,
**characterised in that**
an upper end (19a) of the second driver element (19) is arranged so as to overlap the lower end (5b2) of the second portion (5b) in the vehicle seat height direction (1c) and in front of the lower end (5b2) in the vehicle seat length direction (1a).

5. Vehicle seat (1) according to any of claims 2-4,
**characterised in that**
the first connection (11a) and/or the third connection (11c), when claim 5 is dependent on claim 2, is a loose sliding connection or a relatively movable connection.

6. Vehicle seat (1) according to any of the preceding claims,
**characterised in that**
the rocker-like element (5) is arranged centrally with respect to the transverse direction (1b) of the vehicle seat (1) and/or has at least two edges (18a, 18b) which are arranged so as to substantially extend in the longitudinal extension (14a) of the rocker-like element (5) and by means of which a first right-hand wing-like tab (13a) and a second left-hand wing-like tab (13b) are formed, which tabs are arranged at an angle to a main tab (13c) formed in the centre of the rocker-like element (5).

7. Vehicle seat (1) according to any of claims 1-6,
**characterised in that**,
viewed in the longitudinal extension (14a) of the rocker-like element (5), the upper portion (5a) is rectilinear and/or the lower portion (5b) has at least three curved or rectilinear subportions.

8. Vehicle seat (1) according to any of the preceding claims,
**characterised in that**
the pivot (6) is formed by a transverse bar element (17) arranged on the backrest frame part (2a) and/or is arranged so as to be vertically movable relative to the backrest frame part (2a).

9. Vehicle seat (1) according to any of the preceding claims,
**characterised in that**
the rocker-like element (5) is elastic or partially elastic and/or made of metal, preferably steel, more preferably spring steel, and/or made of plastics material.

10. Vehicle seat (1) according to any of the preceding claims,
**characterised in that**
the rocker-like element (5) is divided into zones (16a, 16b), the zones (16a, 16b) differing in their material composition, their thickness and/or their properties, and/or the rocker-like element (5) being divided into the zones (16a, 16b) with respect to its longitudinal extension (14a), width extension (14b) and/or height extension (14c).

11. Vehicle seat (1) according to any of the preceding claims,
**characterised in that**
the backrest (2) is adjustable with respect to a degree of inclination relative to the seat part (3) into at least two (8a, 8b) positions, preferably into a plurality of positions, or continuously between a rear extreme position and a front extreme position.

## Revendications

1. Siège de véhicule (1), comportant un dossier (2) avec une partie coussin de dossier (10a) et une partie châssis de dossier (2a) et une assise (3) avec une partie coussin d'assise (10b) et une partie châssis d'assise (3a), l'assise (3) est disposée déplaçable vers l'avant (1a1) et/ou vers l'arrière (1a2) par rapport au dossier (2) dans la direction longitudinale du siège de véhicule,
dans lequel un élément de type balancier (5) est monté pivotant à l'intérieur de la partie coussin de dossier (10a) autour d'un axe (6) disposé dans la direction (1b) de la largeur du siège sur la partie châssis de dossier (2a), et dans lequel un premier élément d'entraînement (7) relié à la partie châssis d'assise (3b) au moyen d'une seconde liaison (11b) est apte à être relié de façon fonctionnelle à une extrémité inférieure (5b2) de l'élément de type balancier (5) au moyen d'une première liaison (11a) de telle sorte que, lors d'un déplacement de l'assise (3) par rapport au dossier (2) vers l'avant (1a1) au moins l'extrémité inférieure (5b2) de l'élément de type balancier (5) est déplaçable avec vers l'avant (1a1),
**caractérisé par le fait que**
l'élément de type balancier (5) est disposé s'étendant dans la direction (1c) de la hauteur du siège de véhicule avec son extension longitudinale (14a), une section supérieure (5a) de l'élément de type balancier (5) étant disposée au-dessus de l'axe (6) et une section inférieure (5b) de l'élément de type balancier (5) étant disposée au-dessous de l'axe (6) et un rapport d'une longueur de la section supérieure (5a) à une longueur de la section inférieure (5b) par rapport à une extension longitudinale de l'élément de type balancier (5) correspondant à une valeur dans une plage de 0,3 à 0,7.

2. Siège de véhicule (1) selon l'une des revendications précédentes,
**caractérisé par le fait que**
un second élément d'entraînement (19) est disposé sur la partie châssis d'assise (3b) et/ou sur le premier élément d'entraînement (7), lequel second élément d'entraînement (19) est apte à être relié de façon fonctionnelle avec l'extrémité inférieure (5b2) de l'élément de type balancier (5) au moyen d'une troisième liaison (11c) de telle sorte que, lors d'un déplacement de l'assise (3) par rapport au dossier (2) vers l'arrière (1a2), au moins l'extrémité inférieure (5b2) est déplaçable avec vers l'arrière (1a2).

3. Siège de véhicule (1) selon l'une des revendications précédentes,
**caractérisé par le fait que**
une extrémité supérieure (7a) du premier élément d'entraînement (7) est disposée se chevauchant avec l'extrémité inférieure (5b2) de la seconde section (5b) dans la direction (1c) de la hauteur du siège de véhicule et derrière l'extrémité inférieure (5b2) dans la direction longitudinale (1a) du siège de véhicule.

4. Siège de véhicule (1) selon l'une des revendications 2 ou 3,
**caractérisé par le fait que**
une extrémité supérieure (19a) du second élément d'entraînement (19) est disposée se chevauchant avec l'extrémité inférieure (5b2) de la seconde section (5b) dans la direction (1c) de la hauteur du siège de véhicule et devant l'extrémité inférieure (5b2) dans la direction longitudinale (1a) du siège de véhicule.

5. Siège de véhicule (1) selon l'une des revendications 2-4,
**caractérisé par le fait que**
la première liaison (11a) et/ou la troisième liaison (11c), dans la mesure où la revendication 5 dépend de la revendication 2, est une liaison à glissement lâche ou une liaison à mouvement relatif.

6. Siège de véhicule (1) selon l'une des revendications précédentes,
**caractérisé par le fait que**
l'élément de type balancier (5) est disposé de façon médiane par rapport à la direction transversale (1b) du siège de véhicule (1) et/ou présente au moins deux bords (18a, 18b), lesquels sont disposés s'étendant sensiblement dans l'extension longitudinale (14a) de l'élément de type balancier (5) et au moyen desquels sont formés un premier volet formant ailette droit (13a) et un second volet formant ailette gauche (13b), lesquels sont disposés dans un angle par rapport à un volet principal (13c) formé au centre de l'élément de type balancier (5).

7. Siège de véhicule (1) selon l'une des revendications 1-6,
**caractérisé par le fait que**
considéré dans l'extension longitudinale (14a) de l'élément de type balancier (5), la section supérieure (5a) est réalisée s'étendant de façon rectiligne et/ou la section inférieure (5b) présente au moins trois sous-sections s'étendant de façon courbe ou de façon rectiligne.

8. Siège de véhicule (1) selon l'une des revendications précédentes,
**caractérisé par le fait que**
l'axe (6) est formé au moyen d'un élément barre transversale (17) disposé sur la partie châssis de dossier (2a) et/ou est disposé déplaçable en hauteur par rapport à la partie châssis de dossier (2a).

9. Siège de véhicule (1) selon l'une des revendications précédentes,
**caractérisé par le fait que**
l'élément de type balancier (5) est élastique ou partiellement élastique et/ou est fait de métal, de préférence d'acier, de manière davantage préférée d'acier à ressort, et/ou de matière plastique.

10. Siège de véhicule (1) selon l'une des revendications précédentes,
**caractérisé par le fait que**
l'élément de type balancier (5) est divisé en zones (16a, 16b), les zones (16a, 16b) se distinguant en ce qui concerne leur composition de matière, leur épaisseur et/ou leurs propriétés et/ou une division de l'élément de type balancier (5) dans les zones (16a, 16b) étant réalisée en ce qui concerne son extension longitudinale (14a), son extension en largeur (14b) et/ou son extension en hauteur (14c).

11. Siège de véhicule (1) selon l'une des revendications précédentes,
**caractérisé par le fait que**
le dossier (2) est réglable en ce qui concerne un degré d'inclinaison par rapport à l'assise (3) dans au moins deux (8a, 8b) positions, de préférence dans plusieurs positions, ou en continu entre une position extrême arrière et une position extrême avant.
